## Europäisches Patentamt

## European Patent Office

## Office européen des brevets

(11) Veröffentlichungsnummer: **0 051 297**
**B1**

(12)

# EUROPÄISCHE PATENTSCHRIFT

(45) Veröffentlichungstag der Patentschrift:
03.07.85

(51) Int. Cl.⁴: **C 08 L  63/00,** C 09 D  5/44,
C 08 L  61/06, C 09 D  3/58,
C 09 D  3/56

(21) Anmeldenummer: **81109323.6**

(22) Anmeldetag: **30.10.81**

(54) **Dispersion auf der Basis von selbsthärtenden Mischungen, Verfahren zu deren Herstellung und deren Verwendung.**

(30) Priorität: **05.11.80  DE 3041700**

(43) Veröffentlichungstag der Anmeldung:
**12.05.82 Patentblatt 82/19**

(45) Bekanntmachung des Hinweises auf die Patenterteilung:
**03.07.85 Patentblatt 85/27**

(84) Benannte Vertragsstaaten:
**AT CH DE GB LI**

(56) Entgegenhaltungen:
**DE - A - 1 930 949**
**DE - A - 2 001 232**
**DE - A - 2 415 100**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT,**
**Postfach 80 03 20, D-6230 Frankfurt am Main 80 (DE)**

(72) Erfinder: **Hesse, Wolfgang, Dr., Pfingstbornstrasse 83,**
**D-6200 Wiesbaden (DE)**
Erfinder: **Hofmann, Klaus, Dr., Grundstrasse 44,**
**D-6507 Ingelheim (DE)**
Erfinder: **Manz, Albrecht, Dr., Pappelweg 15,**
**D-6200 Wiesbaden (DE)**
Erfinder: **Ritz, Jürgen, Dr., Am Hipperich 68,**
**D-6500 Mainz (DE)**

ACTORUM AG

## Beschreibung

Es ist bekannt, lacktechnisch brauchbare Dispersionen herzustellen. Dabei werden die Epoxydgruppen eines Gemisches von Epoxydharz auf Basis von Diphenylolpropan und Epichlorhydrin und von Polyaddukten aus Ricinusöl und Epoxydharzen der genannten Basis mit sekundären Aminen umgesetzt, mit Resolen, welche Dimethylenätherbrücken enthalten oder solchen aus Diphenylolpropan und Formaldehyd, nach Verätherung der Methylolgruppen mit Alkoholen vermischt, die Basen neutralisiert, die in organischen Lösungsmitteln befindlichen Mischungen mit Wasser versetzt und das organische Lösungsmittel gegebenenfalls nach Zusatz von Dispergiermitteln oder Oberflächen verbessernden Mitteln ausgetrieben. Dieses Verfahren hat sich zwar gut bewährt, es war jedoch erwünscht, die Dispersionen und deren Herstellung zur Verbesserung der daraus hergestellten Überzüge und aus Gründen der Arbeitssicherheit noch vorteilhafter zu gestalten. Deshalb ist das Ziel der vorliegenden Erfindung, in Dispersionen aus Gemischen von Epoxydharzen und Phenolharzen die Ricinusöl-Komponente überflüssig zu machen.

Ferner ist die Herstellung von nichtionischen Phenolharz-Dispersionen bekannt, die plastifizierende Substanzen, auch Epoxydharze enthalten können. Diese Dispersionen bestehen aus Polyphenolen auf Basis von Phenol bzw. substituierten Phenolen und Formaldehyd, die mit Methylolgruppen substituiert sind. Die Plastifizierung ist bei diesen Dispersionen, welche schadstofffrei härten können, auch durch Zumischen von Epoxydharzen möglich. Bei diesem Dispergierverfahren ist es aber nicht möglich, langkettige Epoxydharze zu verwenden. Es müssen vielmehr solche Epoxydharze verwendet werden, die wegen ihres niedrigen Molekulargewichtes bei Raumtemperatur flüssig sind oder einen sehr niedrigen Schmelzpunkt haben und deshalb nur eine geringere Plastifizierung bewirken. Die Verwendung höhermolekularer Epoxydharze verbietet sich wegen deren zu hoher Schmelzviskosität. Deshalb sind diese Harze nicht mehr dispergierbar. Zum anderen sind nichtionische Dispersionen weder durch Zugabe von basischen Stoffen noch durch Anlegen von elektrischem Strom ausfällbar. Sie entziehen sich somit modernen Applikationsmethoden, beispielsweise der Elektrotauchlackierung.

In einer weiteren Druckschrift wird die Herstellung von wasserlöslichen, schadstofffrei härtenden Phenolharzen auf Basis der Methylolverbindungen von Polyphenolen, nämlich von orthostrukturierten Novolaken, beschrieben. Diese Harze können aber nicht plastifiziert werden. Zur Überführung in wässrige Lösungen müssen sie als Alkali-Phenolate eingesetzt werden. Derartige alkalisch-wässrige Phenolharz-Lösungen eignen sich nicht für lacktechnische Zwecke, weil sie keinen zusammenhängenden Film ergeben und die Überzüge wasserlöslich und spröde sind.

Es ist auch eine wässrige Mischung (DOS 2 415 100), bestehend aus a) einem Reaktionsprodukt einer speziellen Formel eines Polyepoxyds mit einem Mono- oder Dialkanolamin, b) einem wärmehärtbaren Phenol- oder Aminharz und c) Wasser oder einer mit Wasser verdünnbaren Flüssigkeit bekannt. Wie die Formel und die Beispiele zeigen, ist im Reaktionsprodukt a) die Amingruppe durch eine anorganische oder Carbonsäure in Salzform übergeführt. Über den chemischen Aufbau der Phenolharzkomponente b) ist dort nichts offenbart. Bei Verwendung üblicher Phenolharze ist jedoch der Nachteil gegeben, dass keine genügend schnelle Härtung erzielt wird und dass beim Härten Phenol und Formaldehyd abgespalten werden können, was zu einer Umweltbelastung führt.

Die vorstehenden Schwierigkeiten sollen bei der vorliegenden Erfindung behoben werden.

Es wurde nun gefunden, dass man bei einer Dispersion auf Basis von selbsthärtenden Mischungen aus A) Epoxydharzen aus Diphenylolalkan und Epihalogenhydrin und B) Phenolharzen in Form von Methylolverbindungen substituierter Polyphenolverbindungen auf der Basis eines Gemischs substituierter und unsubstituierter Phenole einerseits und Formaldehyd andererseits in einem Gewichtsverhältnis von A) : B) = 10 : 90 bis 90 : 10, vorzugsweise 20 : 80 bis 80 : 20, die dadurch gekennzeichnet ist, dass die mit Basen oder elektrischem Strom abscheidbare Dispersion ein Reaktionsprodukt enthält, das aus einem Epoxydharz A) mit einem durchschnittlichen Molekulargewicht von 300 bis 30 000, vorzugsweise 500 bis 20 000, mit C) einem sekundären Amin, das im Reaktionsprodukt also als tertiäres Amin vorliegt und darin mit einer anorganischen oder einer Monocarbonsäure D) in ein Salz übergeführt ist, hergestellt worden ist, wobei das Amin C) in einem Anteil von 10 bis 100, vorzugsweise 35 bis 100 Äquivalentprozent pro Epoxydgruppe umgesetzt worden ist und das Äquivalentverhältnis zwischen der tertiären Amingruppe und der Säure (25 bis 200) : 100, vorzugsweise (50 bis 175) : 100 beträgt, die vorstehenden Nachteile vermeidet.

Unter dem Begriff «Dispersion» sind disperse Systeme zu verstehen, die sowohl Dispersionen im engeren Sinn als auch kolloide Systeme umfassen. Gewöhnlich haben die Kolloide in den kolloiden Systemen, also kolloiden Lösungen, eine durchschnittliche Teilchengrösse von etwa $10^{-4}$ bis $10^{-6}$ mm. Bei den dispersen Systemen mit einer Teilchengrösse oberhalb dieses Bereiches handelt es sich um Dispersionen im engeren Sinn, also um solche, deren Teilchen sich im Lichtmikroskop abbilden lassen.

Wenn die erfindungsgemässe Dispersion in Form einer Dispersion im engeren Sinn vorliegt, enthält sie zweckmässig ein Reaktionsprodukt des Epoxydharzes A) mit einem durchschnittlichen Molekulargewicht von 1000 bis 30 000, vorzugsweise 2000 bis 20 000. Wenn sie in Form einer kolloiden Lösung vorliegt, enthält sie zweckmässig ein Reaktionsprodukt des Harzes A) mit einem durchschnittlichen Molekulargewicht von 300 bis 30 000, vorzugsweise 500 bis 20 000.

Überraschenderweise werden bei der Härtung der erfindungsgemässen Dispersion keine giftigen Schadstoffe abgespalten. Ausserdem weisen die aus den erfindungsgemässen Dispersionen erhaltenen gehärteten Produkte keine den Geruch oder Geschmack beeinträchtigenden Stoffe auf. Deshalb eignen sich die erfindungsgemässen Dispersionen z.B. auch für die Innenlackierung von Lebensmittelverpackungen.

Die Erfindung sieht auch ein Verfahren zur Herstellung der genannten Dispersion vor, das dadurch gekennzeichnet ist, dass man das Epoxydharz A) mit dem sekundären Amin C) unter Bildung eines tertiären Amins umsetzt, worauf man das tertiäre Amin in mindestens einem organischen Lösungsmittel, das vorzugsweise polar und mit Wasser teilweise mischbar ist, löst und mit der Säure D) in ein Salz überführt, dass vor, während oder nach der Salzbildung mit der Säure mindestens ein Phenolharz B) zugesetzt, die erhaltene Lösung unter Dispergierung mit Wasser versetzt und im Fall der Herstellung einer Dispersion im engeren Sinn darauf das organische Lösungsmittel entfernt wird, und dass das Amin in einem Anteil von 10 bis 100, vorzugsweise 35 bis 100 Äquivalentprozent pro Epoxydgruppe eingesetzt wird und das Äquivalentverhältnis zwischen der tertiären Amingruppe und der Säure (25 bis 200) : 100, vorzugsweise (50 bis 175) : 100 beträgt.

Geeignete Epoxydharze A) sind die handelsüblichen Epoxydharze, insbesondere solche, die auf Basis von Diphenylolalkanen wie Diphenylolmethan (Bisphenol F) und vorzugsweise Diphenylolpropan (Bisphenol A) einerseits und Epihalogenhydrin und/oder Methylepihalogenhydrin, wie Epibromhydrin, vorzugsweise Epichlorhydrin nach dem in der Literatur (siehe z.B. «Epoxydverbindungen und Epoxydharze» Paquin [1958], Seite 322 ff.) beschriebenen Ein- oder Zweistufenverfahren hergestellt werden können, z.B. solche mit einem Erweichungspunkt (EP) nach Durrans von mindestens 70 °C und einem Epoxydäquivalentgewicht (EÄ) von mindestens 180, insbesondere für kolloide Systeme und mindestens 490 für Dispersionen im engeren Sinn; z.B. sind Produkte mit EP 93 bis 104 °C und EÄ 875 bis 1000 und EP 118 °C und EÄ 1865 geeignet.

Geeignete Phenolharze B) sind Methylolverbindungen, insbesondere von solchen Polyphenolverbindungen, die im Fall der Dispersion im engeren Sinn Alkyl-, Alkenyl-, Aryl- und/oder Aralkylgruppen und im Fall der kolloiden Lösung hydrophile Gruppen, wie Hydroxyalkylgruppen, z.B. Mono- oder Polyhydroxyalkylgruppen, als Substituenten enthalten, deren Anteil 5 bis 100, vorzugsweise 10 bis 90 Äquivalent-%, in kolloiden Systemen insbesondere 10 bis 80, und in nichtkolloiden Systemen insbesondere 20 bis 90 Äquivalent-%, bezogen auf phenolische OH-Gruppen, ausmacht. Die Substitution kann sowohl am Kern als auch an den phenolischen OH-Gruppen oder an beiden erfolgen.

Die Phenolharze B lassen sich zweckmässig mehrstufig herstellen, wobei in erster Stufe die Kondensation zu einem substituierten, mit Methylenbrücken verknüpften Polyphenol, einem Novolak erfolgt. Der Kondensationsgrad dieses Novolaks liegt im allgemeinen im niedrigen bis mittleren Bereich, das Molverhältnis zwischen der Summe der Gesamtphenole und Formaldehyd bei den Ausgangsstoffen 1 : (0,1 bis 0,7), vorzugsweise 1 : (0,2 bis 0,65). Es ist möglich, den Novolak zunächst aus Phenol und Formaldehyd herzustellen, das nicht umgesetzte Phenol abzudestillieren und dann zu substituieren, vorzugsweise oxalkylieren oder alkylieren. Dieser Weg empfiehlt sich besonders dann, wenn das substituierende, z.B. alkylierende Reagenz besonders leicht, wie das z.B. bei Vinylaromaten oder Terpenen der Fall ist, am Kern substituiert wird. Als Katalysatoren für die Novolakbildung können Protonensäuren wie Schwefelsäure, Phosphorsäure, Salzsäure oder Lewissäuren wie Borfluorid oder Metallphenole, wie Aluminiumphenolat verwendet werden.

Bei der nachträglichen Substitution des Phenolharzes können zur Herstellung von Dispersionen im engeren Sinn folgende Substituenten eingebaut werden: Geradkettige oder verzweigte Alkylreste mit 1 bis 18, vorzugsweise 4 bis 12 C-Atomen, wie n-Butyl, tertiär- oder sekundär-Butyl, die verschiedenen Octyl-, Nonyl- und Dodecylreste; Cycloaliphaten wie Cyclohexyl; Alkenylreste wie Allyl, Isopentenyl, Isobutenyl, $C_{14}$-Alkenylreste, wie sie in Cashew-Nussöl vorkommen, Terpenreste; Arylreste wie Phenyl; Aralkylreste, die sich ableiten von Styrol, α-Methylstyrol und Vinyltoluol. Diese Substitution an der phenolischen OH-Gruppe kann in an sich bekannter Weise durch Verätherung der phenolischen OH-Gruppen, z.B. nach der Williamson-Synthese erfolgen.

Andererseits können substituierte Novolake auch durch Mischkondensation von substituiertem Phenol mit nichtsubstituiertem Phenol und Formaldehyd hergestellt werden.

Als substituierte Phenole werden genannt: Alkylphenole, besonders p-Alkylphenole wie p-Propyl- und iso-Propylphenol, p-tert.-Butylphenol, p-Octyl- und iso-Octylphenol, p-Nonyl- und iso-Nonylphenol, p-Dodecylphenol, p-Phenylphenol oder p-Cyclohexylphenol, ferner mit Vinylaromaten, besonders Styrol substituierte Phenole.

Zur Herstellung kolloider Lösungen kann die hydrophile Substitution des Polyphenols durch Umsetzung der phenolischen OH-Gruppen mit Monoepoxyden wie Äthylenoxyd, Propylenoxyd Styroloxyd usw., Glycid, Phenylglycidäther usw. erfolgen. Sie kann aber auch mit Hilfe von Halogenhydrinen wie Äthylenchlorhydrin, Propylenchlorhydrin, Dichlorpropanol, Monochlorpropylenglykol durchgeführt werden. Schliesslich ist die zu Alkylolgruppen führende Kernsubstitution mit Oxoverbindungen, besonders mit Formaldehyd, auch als hydrophile Substitution zu betrachten.

Statt der erwähnten substituierten Phenole können auch deren Methylolverbindungen, besonders Dimethylolverbindungen eingesetzt werden. Bei der Berechnung des Ausgangsmolverhältnisses muss der als Methylolgruppe gebundene reaktive Formaldehyd mit berücksichtigt werden. Nach der Kondensationsreaktion werden auch diese Novolake durch Destillation sorgfältig von nicht umgesetztem Phenol befreit.

Die entstandenen substituierten Novolake werden anschliessend in ihre Methylolverbindungen übergeführt. Dieses geschieht durch basenkatalysierte Umsetzung mit Formaldehyd. Als Katalysatoren können beispielsweise Alkali, Erdalkali, aber auch Salze wie die der Übergangsmetalle mit organischen Säuren oder schwachen anorganischen Säuren wie Borsäure, Phosphorsäure verwendet werden. Bevorzugt ist aber die Verwendung von Alkalihydroxyden. Dabei wird der Katalysator und Wasser dem geschmolzenen Novolak zugegeben, die Schmelze auf 30 bis 80, vorzugsweise 40 bis 70 °C abgekühlt und der Formaldehyd entweder als wässriger Formaldehyd oder in Gestalt von Paraformaldehyd zugegeben. Vor, während oder nach der Umsetzung mit Formaldehyd können Lösungsmittel, die den Lösungsprozess unterstützen, besonders aromatische Kohlenwasserstoffe, auch in Mischung mit Alkoholen, oder Alkohole selbst verwendet werden. Bei der Reaktionsführung wird eine nennenswerte Verätherungsreaktion zwischen Methylolgruppen und Alkoholen verhindert. Nach vollständigem Verbrauch des Formaldehyds wird der Katalysator durch Zugabe einer Säure neutralisiert und die wässrige Phase abgezogen. Die Salze können nach der Entwässerung des Reaktionsansatzes durch Destillation unter vermindertem Druck abfiltriert werden.

Geeignete Amine C) sind vor allem sekundäre Amine, wie Alkyl-alkanolamine und Dialkanolamine, z.B. Äthyläthanolamin, Äthylisopropanolamin, Diäthanolamin, Dipropanolamin, die niederen Alkyläther, vorzugsweise Methyl- und/oder Äthyläther dieser Amine, oder andere Amine mit hoher Basenstärke, wie Dialkylamin mit Alkyl- oder Alkylenresten mit jeweils bis zu 3 C-Atomen, z.B. Dimethylamin, Diäthylamin, Dipropylamin in abfallender Wirksamkeit.

Die Reaktion zwischen den Komponenten A) und C) kann im allgemeinen zwischen Raumtemperatur und der Siedetemperatur des Lösungsmittels, vorzugsweise zwischen 60 und 100 °C durchgeführt werden; sie dauert im allgemeinen 10 Minuten bis 2 Stunden.

Geeignete Lösungsmittel für das gebildete tertiäre Amin zur Herstellung einer Dispersion im engeren Sinn sind z.B. die verschiedenen Butanole, Essigester, Methyläthylketon, Cyclohexanon, jeweils einzeln oder im Gemisch bzw. Gemische dieser Lösungsmittel mit einem untergeordneten Anteil an Aromaten oder Benzin, vorzugsweise jedoch n-Butanol. Zur Herstellung eines kolloiden Systems eignen sich mit Wasser ganz oder teilweise mischbare Lösungsmittel, z.B. Glykole, Glykoläther, vorzugsweise Äthylenglykolmonoalkyläther, z.B. solche mit einem Alkylrest von 1 bis 4 C-Atomen und niedere Ketone.

Die Neutralisation des Aminadduktes mit Säuren kann vor, während oder nach dem Zumischen der Phenolharzkomponente erfolgen. Als Säure D) für die Salzbildung kommen beispielsweise Mineralsäure, wie Phosphorsäure oder Monocarbonsäuren wie Ameisensäure, Essigsäure, Sorbinsäure, vorzugsweise jedoch OH-Gruppen enthaltende Monocarbonsäuren, wie Gluconsäure und/oder Milchsäure in Frage.

Da die Phenolharz-Komponenten keine Alkoxymethylgruppen tragen, können bei der Härtung auch keine Alkohole zurückgespalten werden.

Nach der Zugabe von Wasser und gegebenenfalls Dispergierhilfsmitteln wird das Lösungsmittel als Azeotrop, zweckmässig unter vermindertem Druck, abdestilliert. Das Wasser kann zurückgeführt oder in der Menge so bemessen werden, dass keine Rückführung notwendig ist. Die Stabilität dieser Dispersion wird durch die Destillation − gegebenenfalls unter vermindertem Druck − überraschenderweise nicht oder kaum beeinträchtigt, selbst wenn während der Destillation Temperaturen von 70 bis 90 °C angewandt werden, was die Destillationsgeschwindigkeit positiv beeinflusst. Es gelingt auf diese Weise, das Hilfslösungsmittel quantitativ zu entfernen.

Nach einer Ausführungsform der Erfindung können der Dispersion Dispergierhilfsmittel, vorzugsweise kationische oder nichtionische Tenside zugesetzt werden. Geeignete Dispergatoren sind z.B. Polyvinylalkohol, Oxalkylate von OH-Gruppen enthaltenden Verbindungen, wie Polyalkohole, Phenole, Ester von mehrwertigen Alkoholen oder dergleichen.

Die erfindungsgemässen Dispersionen haben den Vorteil, dass sie nicht umgesetzte Ausgangsstoffe nur in Spuren enthalten. Auch bei der thermischen Härtung spalten sich Phenol und Formaldehyd nur in Spuren ab. Auch die Dispersionen im engeren Sinn sind lösungsmittelfrei, sie enthalten Restlösungsmittel nur in Mengen unter 0,5%.

Die Dispersionen sind elastifizierte Epoxydharz-Phenolharz-Dispersionen. Sie haben kationischen Charakter und können deshalb durch Zusatz von basischen Stoffen ausgefällt werden. Sie lassen sich aber auch durch Elektrotauchlackierung, d.h. durch kathodische Abscheidung fällen, wobei an der Kathode ein zusammenhängender Überzug entsteht. Da sie auch selbsthärtend sind, ist es auch möglich, die Dispersionen im Walzlackierverfahren als Einbrennlack oder durch Spritzlackieren − welches gegebenenfalls nach der sogenannten AIRLESS-Methode durchgeführt werden kann − auf die zu schützenden Gegenstände als Überzug aufzubringen. Die Dispersionen sind gegen hohe Drücke weitgehend unempfindlich und bereiten deshalb in Lackieranlagen keine Schwierigkeiten durch Koagulieren, wie es bei anderen Dispersionen wegen deren Druckempfindlichkeit die Regel ist. Bei der thermischen Härtung richten sich die Einbrenntemperaturen auch nach der Art des zur Neutralisation verwendeten Anions und können je nach Anion zwischen 110 und 380 °C, vorzugsweise zwischen 140 und 380 °C liegen. Die benötigten Zeiten liegen zwischen 60 Minuten und wenigen Sekunden.

Die erfindungsgemässen Dispersionen lassen sich nicht nur für Anstrichmittel und Überzüge, sondern auch für verschiedene andere Zwecke, z.B. als Haftvermittler für anorganische Materialien wie Glas, Asbest und dergleichen, als Faserschlichten, Imprägniermittel, Bindemittel für Schleifkörner zur Herstellung von Schleifmitteln auf flexiblen Unterlagen oder von Schleifkörpern oder dergleichen verwenden.

In nachstehenden Beispielen bedeuten T = Gewichtsteile und % = Gewichtsprozent. Die Viskosität der Harze wurde, wenn nicht anders angegeben, jeweils in 50%iger Lösung in Äthylenglykolmonoäthyläther bei 20°C ermittelt. Die Messung der Viskosität der Dispersionen wurde mit dem Viskotester (Hersteller Firma Haake, Berlin) Spindel E 30, Faktor 4 bei 22°C vorgenommen.

Beispiele
1) Dispersion auf Basis Phenylphenol-Phenol-Novolak und Epoxydharz.
a) Herstellung des Novolaks

In einem mit Rührer, Thermometer, Heizung, Kühlung, Vorrichtung zur Destillation und Vorrichtung zur Umlaufdestillation unter vermindertem Druck versehenen Reaktionsgefäss werden 1134 T einer wässrigen 37%igen Formaldehydlösung, 600 T Xylol und 1190 T p-Phenylphenol suspendiert und auf 60°C erwärmt. Bei dieser Temperatur lässt man 420 T wässrige Natronlauge (33%ig) zulaufen und unter Rühren reagieren, bis der Formaldehydgehalt 0,8% beträgt. Der Ansatz wird dann mit 700 T 25%iger Schwefelsäure neutralisiert und auf pH 3,0 eingestellt. Nach dem Absetzen werden 1693 T Unterlauge abgetrennt. Der Ansatz wird mit Wasser gewaschen, nach dem Abtrennen mit 2632 T Phenol versetzt und unter Normaldruck das sich bildende Wasser azeotrop destilliert. Durch Abnehmen eines Teiles des Umlaufmittels Xylol lässt man die Temperatur auf 220°C ansteigen. Es scheiden sich 419 T wässrige Phase ab. Danach destilliert man unter vermindertem Druck 1 Stunde bei 220°C und erhält insgesamt 2330 T Destillat.

Im Reaktionsgefäss verbleiben 2118 T eines phenylsubstituierten Novolaks, Schmelzpunkt 87°C, Viskosität 281 mPa.s/20°C (50%ig in Äthylenglykolmonoäthyläther).

b) Herstellung der Methylolverbindung

662 T des unter a) erhaltenen Novolaks werden geschmolzen; die Schmelze wird auf 120°C gebracht. Bei dieser Temperatur gibt man 240 T 33%iger Natronlauge sowie 180 T Wasser zu. Die Schmelze wird auf 60°C abgekühlt, unter Rühren mit 227 T wässrigem 37%igen Formaldehyd versetzt und bei 60°C 5 Stunden gerührt. Nach dieser Zeit ist kein freier Formaldehyd mehr nachweisbar. Der Ansatz wird mit 520 T Isobutanol sowie 50 T Xylol verdünnt und mit 380 T 25%iger Schwefelsäure auf pH 5,0 eingestellt. Nach Abtrennung der Unterlauge wird der Ansatz mit 500 T Wasser gewaschen. Der Ansatz wird durch Umlaufdestillation bei vermindertem Druck bei einer Sumpftemperatur von 50°C entwässert. Es fallen 411 T Wasser an. Im Kolben verbleiben 1107 T einer 66,3%igen Harzlösung, Viskosität 4540 mPa.s/20°C.

c) Herstellung der Dispersion

In einem wie oben ausgestatteten Reaktionsgefäss werden 300 T eines handelsüblichen Epoxydharzes auf Basis Bisphenol A und Epichlorhydrin mit einem Epoxydäquivalentgewicht von 1700 bis 2000, einem durchschnittlichen Molekulargewicht von 3400 bis 4000 und einer Viskosität von 1750 bis 2700 mPa.s/25°C, (40%ig in Äthylenglykolmonobutyläther) gemeinsam mit 150 T Isobutanol geschmolzen, die Schmelze auf 80°C abgekühlt, mit 10,8 T Diäthanolamin versetzt und 1 Stunde bei dieser Temperatur umgesetzt. Danach lässt man nacheinander 302 T des unter b) erhaltenen Harzes, 60 T 42%ige Glukonsäure sowie 750 T Wasser zulaufen und kühlt unter ständigem Rühren auf 60°C ab. Anschliessend werden unter vermindertem Druck bei einer Sumpftemperatur zwischen 45 und 65°C 520 T eines aus Isobutanol, Xylol und Wasser bestehenden zweiphasigen Destillates abdestilliert. Im Kolben verbleibt eine feinteilige Dispersion, Festkörpergehalt 57,7%, Viskosität 960 mPa.s/22°C, gemessen.

Die Dispersion ist lösungsmittelfrei. Der Gehalt an Isobutanol beträgt 0,01%. Freier Formaldehyd und freies Phenol sind nicht nachweisbar. Sie kann bei 190°C/30 Minuten eingebrannt werden und liefert verformbare, sterilisationsfähige Lakke, die sich als Innenlacke für Lebensmittelbehälter eignen.

2) Dispersion auf Basis von styrolisiertem Novolak und Epoxydharz.
a) Herstellung des Novolaks

In einem mit Thermometer, Rührer, Rückflusskühler, absteigendem Kühler und Vakuumeinrichtung versehenen Reaktionsgefäss werden 70 T Phenol, 0,4 T Maleinsäureanhydrid sowie 32,2 T 30%ige wässrige Formaldehydlösung 3 Stunden am Rückfluss gekocht. Dann legt man verminderten Druck an und destilliert bis zu einer Sumpftemperatur von 220°C die flüchtigen Anteile ab. Im Reaktionsgefäss verbleiben 49,9 T eines Phenolnovolaks mit einer Viskosität von 290 mPa.s/20°C, 50%ig in Äthylenglykolmonoäthyläther. Der Gehalt an freiem Phenol beträgt 0,01%.

b) Herstellung der Methylolverbindung

33,55 T des erhaltenen Novolaks werden geschmolzen und mit 0,1 T konzentrierter Schwefelsäure versetzt. Zu der auf 80°C gehaltenen Schmelze gibt man 17,22 T Styrol, lässt die Temperatur auf 120°C ansteigen und hält diese Temperatur noch eine Stunde. Danach gibt man 18,44 T 33%ige Natronlauge und 14,88 T Wasser zu, kühlt auf 60°C ab und versetzt mit 18,76 T einer 37%igen wässrigen Formaldehydlösung. Nach 3,5 Stunden ist kein freier Formaldehyd mehr nachweisbar. Dann verdünnt man die Schmelze mit 36,69 T Isobutanol und 4,13 T Xylol und neutralisiert mit 16,12 T 50%iger Schwefelsäure. Nach Abtrennen der wässrigen Phase entwässert man wie im Beispiel 1, Absatz 2 durch Umlaufdestillation unter vermindertem Druck und erhält 96 T einer 60%igen Harzlösung mit einer Viskosität von 1150 mPa.s/20°C.

c) Herstellung der Dispersion

In einem wie oben ausgestatteten Reaktionsgefäss schmilzt man 250 T des im Beispiel 1 genannten Epoxydharzes in Gegenwart von 125 T n-Butanol und setzt wie dort mit 10,8 T Diäthanolamin um. Dann gibt man 410 T des im vorhergehenden Absatz beschriebenen Harzes sowie 58 T 42%iger Glukonsäure sowie 750 T Wasser zu. Nach ½-stündigem Rühren werden aus der erhaltenen Harzsuspension wie im Beispiel 1 535 T Destillat unter vermindertem Druck abdestilliert. Die Sumpftemperatur beträgt höchstens 65°C, die Heizmitteltemperatur höchstens 85°C. Im Kolben verbleiben 1075 T einer feinverteilten wässrigen Dispersion, die einen Restgehalt von 0,1% n-Butanol und 0,05% Isobutanol besitzt. Freier Formaldehyd und freies Phenol sind nicht nachweisbar.

Zu dieser Dispersion werden 20 T einer 5%igen wässrigen Polyvinylalkohollösung als Dispergator gegeben. Dieser Polyvinylalkohol weist einen Hydrolysegrad von 87,7 ± 1%, eine Esterzahl von 140 ± 10, einen Restacetylgehalt von 10,7 ± 0,7, einen Aschegehalt von 0,5% sowie eine Viskosität von 2600 ± 150 mPa.s/20°C, gemessen als 4%ige wässrige Lösung, auf. Die fertige Dispersion besitzt einen Rückstand von 49% und eine Viskosität von 390 mPa.s/22°C.

Die Dispersion kann als Konservendoseninnenlack verwendet und bei 190°C/30 Minuten eingebrannt werden. Nach dem Einbrennen sind die im Schleuderlackierverfahren erhaltenen, 4 Mikrometer dünnen Lackfilme sterilisationsfest und elastisch. Sie geben keine Geschmackstoffe an die Füllgüter ab, wenn sie als Innenlack für Lebensmittelbehälter benutzt werden.

3) Kolloide Lösung auf Basis von Phenol-Hydroxypropyl-Dihydroxypropylphenol-Novolak und Epoxydharz.

a) Herstellung des Novolaks

In einem mit Thermometer, Rührer, Rückflusskühler, absteigendem Kühler und Vakuumeinrichtung versehenen Reaktionsgefäss werden 70 T Phenol, 0,4 T Maleinsäureanhydrid sowie 32,2 T 30%ige wässrige Formaldehydlösung 3 Stunden am Rückfluss gekocht. Dann legt man verminderten Druck an und destilliert bis zu einer Sumpftemperatur von 220°C die flüchtigen Anteile ab. Im Reaktionsgefäss verbleiben 49,9 T eines Phenolnovolaks mit einer Viskosität von 290 mPa.s/20°C, 50%ig in Äthylenglykolmonoäthyläther. Der Gehalt an freiem Phenol beträgt 0,01%.

b) Herstellung der Methylolverbindung

1500 T des nach a) erhaltenen Polyphenols werden geschmolzen und bei 110°C nacheinander mit 430 T 33%iger Natronlauge und 375 T Wasser versetzt und auf 90°C abgekühlt. Bei dieser Temperatur gibt man 320 T Glycid zu, hält diese Temperatur eine Stunde und kühlt anschliessend auf 60°C ab. Dann lässt man 810 T einer wässrigen 37%igen Formaldehydlösung zulaufen und rührt, bis der Formaldehydgehalt auf 0 sinkt. Das dauert etwa 5 Stunden. Dann gibt man zum Ansatz 320 T Toluol und 960 T n-Butanol und stellt mit 700 T 25%iger Schwefelsäure einen pH um 4,0 ein. Nach der Phasentrennung trennt man 1478 T Unterlauge ab und wäscht danach mit 600 T einer halbkonzentrierten Natriumchloridlösung. Danach trennen sich nochmals 555 T Unterlauge ab. Der Ansatz wird unter vermindertem Druck unter Rückführung des Lösungsmittels entwässert. Dabei scheiden sich etwa 500 T Wasser ab. Nach der Filtration verbleiben 3285 T eines 67,6%igen Harzes mit einer Viskosität von 2200 mPa.s/20°C.

c) Herstellung der kolloiden Lösung

1100 T der so erhaltenen Lösung werden unter vermindertem Druck auf dem Wasserbad bei einer Sumpftemperatur von 80°C vom Lösungsmittel befreit und mit 150 T Äthylenglykolmonoäthyläther versetzt.

Zu dieser Harzlösung gibt man 2057 T einer wie folgt erhaltenen Lösung: 1902 T eines Epoxydharzes auf Basis Bisphenol A und Epichlorhydrin mit einem Epoxydäquivalentgewicht zwischen 900 und 1000 (Handelsprodukt Epikote® 1004 der Firma Shell) werden in der gleichen Menge Äthylenglykolmonoäthyläther gelöst, die Lösung auf 80°C erhitzt, mit 210 T Diäthanolamin versetzt, 2 Stunden bei 80°C gehalten und abgekühlt. Die mit quantitativer Ausbeute anfallende Lösung besitzt einen Rückstand (1ʰ135°C) von 54,7% und eine Viskosität von 3200 mPa.s/20°C. Die erhaltene Mischung aus dem Phenolharz und dem modifizierten Epoxydharz besitzt einen Rückstand von 63% und eine Viskosität von 8200 mPa.s/20°C. Diese Harzlösung ist nicht mit Wasser verdünnbar.

200 T dieser Harzlösung werden nun mit 24,5 T Glukonsäure (47,5%) versetzt. Dabei stellt sich ein pH von 6,1 ein. Das Harz ist wasserlöslich und weist bei einem Rückstand von 60% eine Viskosität von 8000 mPa.s/20°C auf. Durch weitere Verdünnung mit Wasser werden kolloide Lösungen erhalten, die sich für Lackanwendungen eignen. Bei der Verdünnung mit Wasser stellen sich folgende Viskositäten und pH-Werte ein:

| Rückstand % | Viskosität mPa.s/20°C | pH-Wert |
|---|---|---|
| 60 | 5000 | 5,9 |
| 55 | 4600 | 5,8 |
| 45 | 800 | 5,7 |
| 35 | 70 | 5,6 |
| 25 | 15 | 5,4 |

Die kolloide Lösung kann als Konservendoseninnenlack verwendet und bei 190°C/30 Minuten eingebrannt werden. Nach dem Einbrennen sind die im Schleuderlackierverfahren erhaltenen 4 µm dünnen Lackfilme sterilisationsfest und elastisch. Sie geben keine Geschmacksstoffe an die Füllgüter ab, wenn sie als Innenlack für Lebensmittelbehälter benutzt werden.

4) Kolloide Lösung auf Basis von Phenol-Hydroxypropylphenol-Novolak und Epoxydharz.

a) Herstellung der Methylolverbindung

1500 T des wie in Beispiel 3a) hergestellten Polyphenols werden geschmolzen, mit 430 T Natronlauge und 375 T Wasser versetzt und auf 90 °C abgekühlt. Bei dieser Temperatur lässt man insgesamt 250 T Propylenoxyd eintropfen. Die Substanz wird sofort verbraucht. Nach Beendigung des Zutropfens kühlt man auf 50 °C ab, lässt während des Abkühlens 810 T einer wässrigen, 37%igen Formaldehydlösung zulaufen und rührt bei 50 °C, bis nach 6 Stunden der Formaldehydgehalt 0% beträgt. Danach versetzt man das Harz mit 320 T Toluol und 960 T Butanol und stellt mit 695 T 25%iger Schwefelsäure einen pH-Wert von 4 ein. Nach Abtrennen der Unterlauge wäscht man mit 600 T einer halbkonzentrierten Natriumchloridlösung, trennt auch die zweite Unterlauge ab und entwässert durch Destillation unter vermindertem Druck und unter Rückführung des Lösungsmittels. Dabei scheiden sich 450 T Wasser ab. Die erhaltene Harzlösung wird mit 369 T Isobutanol auf 60% verdünnt. Die erhaltene Harzlösung besitzt eine Viskosität von 700 mPa.s.

b) Herstellung der kolloiden Lösung

170 T der erhaltenen Phenolharzlösung werden wie im Beispiel 3 auf dem Wasserbad unter vermindertem Druck vom Lösungsmittel befreit und mit 60 T Äthylenglykolmonoäthyläther versetzt. Dann versetzt man diese Lösung mit 270 T der nach Beispiel 1, Absatz 3 erhaltenen Lösung eines aminmodifizierten Epoxydharzes. Diese Lösung ist nicht wasserverdünnbar, besitzt einen pH-Wert von 7,08. Nach Zugabe von 50 T Glukonsäure (47,5%ig) stellt sich bei einem Rückstand 56,2% der pH von 6,1 ein. Die Viskosität beträgt 2600 mPa.s/20 °C. Beim Verdünnen mit Wasser stellen sich folgende Viskositäten und pH-Werte ein:

| Rückstand % | Viskosität mPa.s/20°C | pH-Wert |
|---|---|---|
| 55 | 2070 | 6,0 |
| 45 | 1450 | 6,0 |
| 35 | 360 | 5,8 |
| 25 | 35 | 5,5 |

**Patentansprüche für die Vertragsstaaten: CH, DE, GB, Li**

1. Dispersion auf Basis von selbsthärtenden Mischungen aus
A) Epoxydharzen aus Diphenylolalkan und Epihalogenhydrin und
B) von Alkoxymethylgruppen weitgehend freien Phenolharzen in Form von Methylolverbindungen substituierter, über Methylenbrücken verknüpfter Polyphenolverbindungen auf der Basis eines Gemisches substituierter und unsubstituierter Phenole einerseits und Formaldehyd andererseits in einem Gewichtsverhältnis von A) : B) = 10:90 bis 90:10, dadurch gekennzeichnet, dass die mit Basen oder elektrischem Strom abscheidbare Dispersion ein Reaktionsprodukt enthält, das aus einem Epoxydharz A) mit einem durchschnittlichen Molekulargewicht von 300 bis 30 000 mit C) einem sekundären Amin, das im Reaktionsprodukt also als tertiäres Amin vorliegt und darin mit einer anorganischen oder einer Monocarbonsäure D) in ein Salz übergeführt ist, hergestellt worden ist, wobei das Amin C) in einem Anteil von 10 bis 100 Äquivalentprozent pro Epoxydgruppe umgesetzt worden ist und das Äquivalentverhältnis zwischen der tertiären Amingruppe und der Säure (25 bis 200) : 100 beträgt.

2. Dispersion nach Anspruch 1, dadurch gekennzeichnet, dass sie in Form einer Dispersion im engeren Sinn vorliegt und ein Reaktionsprodukt des Amins C) mit dem Epoxydharz A) enthält, das ein durchschnittliches Molekulargewicht von 1000 bis 30 000, vorzugsweise 2000 bis 20 000 hat, oder dass sie in Form einer kolloiden Lösung vorliegt und ein Reaktionsprodukt des Amins C) mit dem Epoxydharz A) enthält, das ein durchschnittliches Molekulargewicht von 300 bis 30 000, vorzugsweise 500 bis 20 000 aufweist.

3. Dispersion nach Anspruch 1 oder 2, dadurch gekennzeichnet, dass das Phenolharz B) im Fall der Dispersion im engeren Sinn Alkyl-, Alkenyl-, Aryl- und/oder Aralkylgruppen und im Fall der kolloiden Lösung Monohydroxyalkyl- oder Polyhydroxyalkylgruppen als Substituenten enthält, deren Anteil 5 bis 100, vorzugsweise 10 bis 90 Äquivalent-%, bezogen auf phenolische OH-Gruppen, ausmacht.

4. Dispersion nach einem oder mehreren der Ansprüche 1 bis 3, dadurch gekennzeichnet, dass die Aminkomponente C) ein Dialkanolamin oder Dialkylamin mit Alkyl- oder Alkylenresten mit jeweils bis zu 3 C-Atomen ist.

5. Dispersion nach einem oder mehreren der Ansprüche 1 bis 4, dadurch gekennzeichnet, dass die Komponente D) eine OH-Gruppen enthaltende Monocarbonsäure, vorzugsweise Glukonsäure und/oder Milchsäure ist.

6. Dispersion nach einem oder mehreren der Ansprüche 1 bis 5, dadurch gekennzeichnet, dass der Dispersion im engeren Sinn ein Dispergierhilfsmittel, vorzugsweise kationaktive oder nichtionische Tenside zugesetzt ist.

7. Dispersion nach einem oder mehreren der Ansprüche 1 bis 6, dadurch gekennzeichnet, dass für die Dispersion im engeren Sinn ein niederer Alkohol, vorzugsweise Butanol und für die kolloide Lösung ein Glykoläther, vorzugsweise Äthylenglykolmonoalkyläther, als Lösungsmittel eingesetzt wird.

8. Verfahren zur Herstellung der Dispersion nach einem oder mehreren der Ansprüche 1 bis 7, dadurch gekennzeichnet, dass man das Epoxydharz A) mit dem sekundären Amin C) unter Bildung eines tertiären Amins umsetzt, worauf man das tertiäre Amin in mindestens einem organischen Lösungsmittel löst und mit der Säure D) in ein Salz überführt, dass vor, während oder nach der Salzbildung mit der Säure mindestens ein Phenolharz B) zugesetzt, die erhaltene Lösung unter Dispergierung mit Wasser versetzt und im Fall der Herstellung einer Dispersion im engeren Sinn darauf das organische Lösungsmittel entfernt wird, und dass das Amin in einem Anteil von 10 bis 100, vorzugsweise 35 bis 100 Äquivalentprozent pro Epoxydgruppe eingesetzt wird und das Äquivalentverhältnis zwischen der tertiären Amingruppe und der Säure (25 bis 200) : 100, vorzugsweise (50 bis 175) : 100 beträgt.

9. Verwendung der Dispersion nach einem oder mehreren der Ansprüche 1 bis 7 oder der nach dem Verfahren gemäss Anspruch 8 hergestellten Dispersion zur Herstellung von Überzügen.

10. Ausführungsform nach Anspruch 9 zur Herstellung von Überzügen durch Elektrotauchlackierung, insbesondere durch kathodische Abscheidung.

**Patentansprüche für den Vertragsstaat: AT**

1. Verfahren zur Herstellung von Dispersionen, die mit Basen oder elektrischem Strom abscheidbar sind, auf Basis von selbsthärtenden Mischungen aus A) Epoxydharzen aus Diphenylolalkan und Epihalogenhydrin und B) von Alkoxymethylgruppen weitgehend freien Phenolharzen in Form von Methylolverbindungen substituierter, über Methylenbrücken verknüpfter Polyphenolverbindungen auf der Basis eines Gemisches substituierter und unsubstituierter Phenole einerseits und Formaldehyd andererseits in einem Gewichtsverhältnis von A) : B) = 10:90 bis 90:10, dadurch gekennzeichnet, dass man ein Epoxydharz A) mit einem durchschnittlichen Molekulargewicht von 300 bis 30 000 mit C) einem sekundären Amin unter Bildung eines tertiären Amins umsetzt, worauf man das tertiäre Amin in mindestens einem organischen Lösungsmittel löst und mit D) einer anorganischen oder einer Monocarbonsäure in ein Salz überführt und dass vor, während oder nach der Salzbildung mit der Säure mindestens ein Phenolharz B) zugesetzt wird, die erhaltene Lösung unter Dispergierung mit Wasser versetzt und im Fall der Herstellung einer Dispersion im engeren Sinn darauf das organische Lösungsmittel entfernt wird, und dass das Amin in einem Anteil von 10 bis 100 Äquivalentprozent pro Epoxydgruppe eingesetzt wird und das Äquivalentverhältnis zwischen der tertiären Amingruppe und der Säure (25 bis 200) : 100 beträgt.

2. Verfahren nach Anspruch 1, dadurch gekennzeichnet, dass zur Herstellung einer Dispersion im engeren Sinne ein Epoxydharz A) mit einem durchschnittlichen Molekulargewicht von 1000 bis 30 000, vorzugsweise 2000 bis 20 000 und zur Herstellung einer kolloiden Lösung ein Epoxydharz A) mit einem durchschnittlichen Molekulargewicht von 300 bis 30 000, vorzugsweise 500 bis 20 000 umgesetzt wird.

3. Verfahren nach Anspruch 1 oder 2, dadurch gekennzeichnet, dass zur Herstellung einer Dispersion im engeren Sinn ein Phenolharz B) verwendet wird, das Alkyl-, Alkenyl-, Aryl- und/oder Aralkylgruppen als Substituenten enthält, und dass zur Herstellung einer kolloiden Lösung ein Phenolharz B) verwendet wird, das Monohydroxyalkyl- oder Polyhydroxyalkylgruppen als Substituenten enthält, wobei der Anteil der Substituenten 5 bis 100, vorzugsweise 10 bis 90 Äquivalent-

%, bezogen auf phenolische OH-Gruppen, ausmacht.

4. Verfahren nach einem oder mehreren der Ansprüche 1 bis 3, dadurch gekennzeichnet, dass die Aminkomponente C) ein Dialkanolamin oder Dialkylamin mit Alkyl- oder Alkylenresten mit jeweils bis zu 3 C-Atomen ist.

5. Verfahren nach einem oder mehreren der Ansprüche 1 bis 4, dadurch gekennzeichnet, dass die Komponente D) eine OH-Gruppe enthaltende Monocarbonsäure, vorzugsweise Glukonsäure und/oder Milchsäure ist.

6. Verfahren nach einem oder mehreren der Ansprüche 1 bis 5, dadurch gekennzeichnet, dass der Dispersion im engeren Sinn noch ein Dispergierhilfsmittel, vorzugsweise kationaktive oder nichtionische Tenside zugesetzt wird.

7. Verfahren nach einem oder mehreren der Ansprüche 1 bis 6, dadurch gekennzeichnet, dass für die Dispersion im engeren Sinn ein niederer Alkohol, vorzugsweise Butanol und für die kolloide Lösung ein Glykoläther, vorzugsweise Äthylenglykolmonoalkyläther, als Lösungsmittel eingesetzt wird.

8. Verfahren nach einem oder mehreren der Ansprüche 1 bis 7, dadurch gekennzeichnet, dass das Amin in einem Anteil von 35 bis 100 Äquivalent-% pro Epoxydgruppe eingesetzt wird und das Äquivalentverhältnis zwischen der tertiären Amingruppe und der Säure (50 bis 175) : 100 beträgt.

**Claims for the contracting states: CH, GB, Li, DE**

1. Dispersion based on self-hardening mixtures of A) epoxy resins obtained from diphenylolalkan and epihalogenhydrin and B) phenolic resins, being largely free of alkoxy methyl groups, in the form of methylol compounds of substituted polyphenol compounds connected by methylene bridges based on a mixture of substituted and unsubstituted phenols on the one hand and formaldehyde on the other hand in a weight ratio of A):B) of from 10:90 to 90:10, characterized in that the dispersion which may be deposited by means of bases or electric current, contains a reaction product which has been prepared from an epoxy resin A) with an average molecular weight of from 300 to 30 000 with C) a secondary amine which is thus present in the reaction product as a tertiary amine and is converted into a salt therein with an anorganic or a monocarboxylic acid D), the amine C) having been reacted in an amount of from 10 to 100 equivalent-% per epoxy group, and wherein the equivalent ratio between the tertiary amino group and the acid is (25 to 200):100.

2. Dispersion according to claim 1, characterized in that it is present in the form of a dispersion in the strict sense and contains a reaction product of amine C) with the epoxy resin A), with an average molecular weight of from 1000 to 30 000, preferably 2000 to 20 000, or in that it is present in the form of a colloid solution and contains a reaction product of amine C) with the epoxy resin A) with an average molecular weight of from 300 to 30 000, preferably 500 to 20 000.

3. Dispersion according to claims 1 or 2, characterized in that the phenolic resin B) contains alkyl, alkenyl, aryl and/or aralkyl groups in the case of a dispersion in the stricter sense and contains monohydroxy alkyl or polyhydroxy alkyl group as substituents in the case of the colloid solution, the proportions of these substituents being 5 to 100, preferably 10 to 90 equivalent-%, based on phenolic OH-groups.

4. Dispersion according to one or more of the claims 1 to 3, characterized in that the amine component C) is a dialkanolamine or dialkylamine having alkyl or alkylene groups each with up to 3 carbon atoms.

5. Dispersion to one or more of the claims 1 to 4, characterized in that component D) is a monocarboxylic acid containing OH-groups, preferably gluconic acid and/or lactic acid.

6. Dispersion according to one or more of the claims 1 to 5, characterized in that a dispersing agent, preferably cationically active or non-ionic surfactants, is added to the dispersion in the stricter sense.

7. Dispersion according to one or more of the claims 1 to 6, characterized in that a lower alcohol, preferably butanol is used for the dispersion in the stricter sense and a glykol ether, preferably ethyleneglycolmonoalkyl ether is used for the colloid solution as the solvent.

8. Process for preparing the dispersion according to one or more of the claims 1 to 7, characterized in that the epoxy resin A) is reacted with the secondary amine C) to form a tertiary amine, whereupon the tertiary amine is dissolved in at least one organic solvent and is converted with the acid D) into a salt and in that, before, during or after the salt formation with the acid, at least one phenolic resin B) is added, the resulting solution is mixed with water to form a dispersion, and, in the case of the preparation of the dispersion in the stricter sense, the organic solvent is then removed, and in that the amine is used in an amount of from 10 to 100, preferably 35 to 100 equivalent percent per epoxy group and the equivalent ratio between the tertiary amine group and the acid is (25 to 200):100, preferably (50 to 175):100.

9. Use of the dispersion according to one or more of the claims 1 to 7 or of the dispersion prepared by the process according to claim 8 for the preparation of coatings.

10. Use according to claim 9 for the preparation of coatings by electrodeposition, more particularly by cathodic precipitation.

**Claims for the contracting state: AT**

1. Process for preparing dispersions which may be deposited by means of bases or electric current which are based on self-hardening mixtures of A) epoxy resins obtained from diphenylolalkan and epihalogenhydrin and B) phenolic resins, being largely free of alkoxy methyl groups, in the form of methylol compounds of substituted polyphenol compounds connected by methylene bridges based on a mixture of substituted and unsubstituted phenols on the one hand and formaldehyde on the other hand in a weight ratio of A):B) of from 10:90 to 90:10, characterized in that an epoxy resin A) with an average molecular weight of from 300 to 30 000 is reacted with C) a secondary amine to form a tertiary amine which is subsequently dissolved in at least one organic solvent and is converted into a salt with an anorganic or a monocarboxylic acid D) during or after the salt formation with the acid, at least one phenolic resin B) is added, the resulting solution is mixed with water to form a dispersion, and in the case of a dispersion in the stricter sense, the organic solvent is removed, and the amine C) is used in an amount of from 10 to 100 equivalent-% per epoxy group, and the equivalent ratio between the tertiary amino group and the acid is (25 to 200):100.

2. Process according to claim 1, characterized in that for preparing a dispersion in the stricter sense an epoxy resin A), with an average molecular weight of from 1000 to 30 000, preferably 2000 to 20 000, and for preparing a colloid solution an epoxy resin A) with an average molecular weight of from 300 to 30 000, preferably 500 to 20 000 is reacted.

3. Process according to claims 1 or 2, characterized in that for preparing a dispersion in the stricter sense a phenolic resin B) is used which contains alkyl, alkenyl, aryl and/or aralkyl groups, and for preparing a colloid solution a phenolic resin B) is used which contains monohydroxy alkyl or polyhydroxy alkyl groups as substituents the proportions of these substituents being 5 to 100, preferably 10 to 90 equivalent-%, based on phenolic OH-groups.

4. Process according to one or more of the claims 1 to 3, characterized in that the amine component C) is a dialkanolamine or dialkylamine having alkyl or alkylene groups each, with up to 3 carbon atoms.

5. Process according to one or more of the claims 1 to 4, characterized in that component D) is a monocarboxylic acid containing OH-groups, preferably gluconic acid and/or lactic acid.

6. Process according to one or more of the claims 1 to 5, characterized in that a dispersing agent, preferably cationically active or non-ionic surfactants, is added to the dispersion in the stricter sense.

7. Process according to one or more of the claims 1 to 6, characterized in that a lower alcohol, preferably butanol is used for the dispersion in the stricter sense and a glykol ether, preferably ethyleneglycolmonoalkyl ether is used for the colloid solution as the solvent.

8. Process according to one or more of the claims 1 to 7, characterized in that the amine is used in an amount of from 35 to 100 equivalent percent per epoxy group and the equivalent ratio between the tertiary amine group and the acid is (50 to 175):100.

**Revendications pour les Etats contractants: CH/Li, DE, GB**

1. Dispersion à base de mélanges autodurcissants formés:

A) de résines époxydes d'un diphénylolalcane et d'une épihalogénhydrine, et

B) de résines phénoliques sensiblement sans groupes alcoxyméthyliques, qui sont des composés polyphénoliques reliés par des ponts méthylène et substitués par des groupes méthyloliques, à base d'un mélange de phénols substitués et non substitués d'une part, et d'autre part de formaldéhyde, dans un rapport pondéral A) : B) compris entre 10:90 et 90:10, caractérisée en ce que la dispersion, pouvant former des dépôts avec des bases ou par un courant électrique, contient un produit de réaction qui a été formé à partir d'une résine époxyde A) ayant une masse moléculaire moyenne de 300 à 30 000 avec C) une amine secondaire se trouvant également dans le produit de réaction à l'état d'amine tertiaire et y étant transformée en un sel avec un acide minéral ou un acide monocarboxylique D), par réaction de l'amine C) dans une proportion de 10 à 100% en équivalents par groupe époxyde, et le rapport des équivalents entre le groupe amino tertiaire et l'acide étant de (25 à 200) : 100.

2. Dispersion selon la revendication 1, caractérisée en ce qu'elle est sous la forme d'une dispersion au sens étroit du terme et contient un produit de réaction de l'amine C) avec la résine époxyde A) ayant une masse moléculaire moyenne de 1000 à 30 000, de préférence de 2000 à 20 000, ou bien sous la forme d'une solution colloïdale et contient un produit de réaction de l'amine C) avec la résine époxyde A) ayant une masse moléculaire moyenne de 300 à 30 000, de préférence de 500 à 20 000.

3. Dispersion selon la revendication 1 ou 2, caractérisée en ce que la résine phénolique B) comporte comme substituants, dans le cas d'une dispersion au sens étroit du terme, des groupes alkyles, alcényles, aryles et/ou aralkyles, et dans le cas d'une solution colloïdale des groupes monohydroxyalkyles ou polyhydroxyalkyles, dans une proportion représentant 5 à 100% en équivalents, de préférence 10 à 90 équivalents %, par rapport aux hydroxyles phénoliques.

4. Dispersion selon une ou plusieurs des revendications 1 à 3, caractérisée en ce que l'amine C) est une dialcanolamine ou une dialkylamine à radicaux alkyles ou alkylènes pouvant avoir chacun jusqu'à 3 atomes de carbone.

5. Dispersion selon une ou plusieurs des revendications 1 à 4, caractérisée en ce que la composante D) est un acide monocarboxylique à hydroxylique, de préférence l'acide gluconique et/ou l'acide lactique.

6. Dispersion selon une ou plusieurs des revendications 1 à 5, caractérisée en ce qu'une dispersion au sens étroit du terme est additionnée d'un auxiliaire de dispersion, de préférence d'un agent tensio-actif cationique ou non ionique.

7. Dispersion selon une ou plusieurs des revendications 1 à 6, caractérisée en ce qu'une dispersion au sens étroit du terme est additionnée, comme solvant, d'un alcool inférieur, de préférence le butanol, et une solution colloïdale d'un éther glycolique, de préférence un éther monoalkylique de l'éthylène-glycol.

8. Procédé de préparation d'une dispersion selon une ou plusieurs des revendications 1 à 7, procédé caractérisé en ce que l'on fait réagir la résine époxyde A) avec l'amine secondaire C) pour former une amine tertiaire, puis on dissout l'amine tertiaire dans un solvant organique ou un mélange de solvants et on la transforme en un sel avec l'acide D), avant, pendant ou après la formation du sel avec l'acide on ajoute une ou plusieurs résines phénoliques B), on additionne d'eau en la dispersant la solution obtenue et, dans le cas de la préparation d'une dispersion au sens étroit du terme, on élimine le solvant organique, on ajoute l'amine à raison de 10 à 100% en équivalents, de préférence de 35 à 100 équivalents %, par groupe époxyde, et le rapport en équivalents entre le groupe amino tertiaire et l'acide est de (25 à 200) : 100, de préférence de (50 à 175) : 100.

9. Utilisation pour la formation de revêtements d'une dispersion selon une ou plusieurs des revendications 1 à 7 ou qui a été obtenue par le procédé selon la revendication 8.

10. Utilisation selon la revendication 9 pour la formation de revêtements par dépôt électrophorétique, en particulier par dépôt cathodique.

**Revendications pour l'Etat contractant: AT**

1. Procédé de préparation de dispersions pouvant former des dépôts avec des bases ou par un courant électrique, à base de mélanges autodurcissants formés A) de résines époxydes d'un diphénylolalcane et d'une épihalogénhydrine et B) de résines phénoliques sensiblement sans groupes alcoxyméthyliques, qui sont des composés polyphénoliques reliés par des ponts méthylène, à substituants méthyloliques, à base d'un mélange de phénols substitués et non substitués d'une part, et d'autre part de formaldéhyde, dans un rapport pondéral A) : B) compris entre 10:90 et 90:10, procédé caractérisé en ce que l'on fait réagir une résine époxyde A) ayant une masse moléculaire moyenne de 300 à 30 000 avec C) une amine secondaire pour former une amine tertiaire, puis on dissout l'amine tertiaire dans un solvant organique ou dans un mélange de solvants et on la transforme en un sel avec D) un acide minéral ou un acide monocarboxylique, avant, pendant ou après la formation du sel avec l'acide on ajoute une ou plusieurs résines phénoliques B), on additionne d'eau en la dispersant la solution obtenue et, dans le cas de la préparation d'une dispersion au sens étroit du terme, on élimine le solvant organique, on ajoute l'amine dans une proportion de 10 à 100% en équivalents par groupe époxyde, et le rapport en équivalents entre le groupe amino tertiaire et l'acide est de (25 à 200) : 100.

2. Procédé selon la revendication 1, caractérisé en ce que pour préparer une dispersion au sens étroit du terme, on fait réagir une résine époxyde A) ayant une masse moléculaire moyenne de 1000 à 30 000, de préférence de 2000 à 20 000, et pour préparer une solution colloïdale, on fait réagir une résine époxyde ayant une masse moléculaire moyenne de 300 à 30 000, de préférence de 500 à 20 000.

3. Procédé selon la revendication 1 ou 2, caractérisé en ce que pour préparer une dispersion au sens étroit du terme, on utilise une résine phénolique B) à substituants alkyliques, alcényliques, aryliques et/ou aralkyliques, et pour préparer une solution colloïdale on utilise une résine phénolique B) à substituants monohydroxyalkyliques ou polyhydroxyalkyliques, la proportion des substituants représentant 5 à 100% en équivalents, de préférence 10 à 90 équivalents %, par rapport aux hydroxyles phénoliques.

4. Procédé selon une ou plusieurs des revendications 1 à 3, caractérisé en ce que l'amine C) est une dialcanolamine ou une dialkylamine à radicaux alkyles ou alkylènes pouvant avoir chacun jusqu'à 3 atomes de carbone.

5. Procédé selon une ou plusieurs des revendications 1 à 4, caractérisé en ce que la composante D) est un acide monocarboxylique hydroxylique, de préférence l'acide gluconique et/ou l'acide lactique.

6. Procédé selon une ou plusieurs des revendications 1 à 5, caractérisé en ce que la dispersion au sens étroit du terme est additionnée d'un auxiliaire de dispersion, de préférence d'un agent tensio-actif cationique ou non ionique.

7. Procédé selon une ou plusieurs des revendications 1 à 6, caractérisé en ce que la dispersion au sens étroit du terme est additionnée d'un alcool inférieur, de préférence le butanol, et une solution colloïdale d'un éther glycolique, de préférence un éther monoalkylique de l'éthylène-glycol, comme solvant.

8. Procédé selon une ou plusieurs des revendications 1 à 7, caractérisé en ce que l'amine est ajoutée dans une proportion de 35 à 100% en équivalents par groupe époxyde, et le rapport en équivalents entre le groupe amino tertiaire et l'acide est de (50 à 175) : 100.